Europäisches Patentamt

European Patent Office

Office européen des brevets

(11) Publication number: **0 450 731 A1**

## EUROPEAN PATENT APPLICATION

(21) Application number: 91200795.2

(22) Date of filing: 04.04.91

(51) Int. Cl.5: **B32B 19/04**, B32B 21/04, B32B 17/00, E04B 1/62, E04C 2/36

(30) Priority: 05.04.90 NL 9000797

(43) Date of publication of application:
09.10.91 Bulletin 91/41

(84) Designated Contracting States:
BE DE LU NL

(71) Applicant: OPSTALAN B.V.
Beneluxstraat 1
NL-5061 KD Oisterwijk(NL)

(72) Inventor: **The designation of the inventor has not yet been filed**

(74) Representative: de Bruijn, Leendert C. et al
Nederlandsch Octrooibureau
Scheveningseweg 82 P.O. Box 29720
NL-2502 LS 's-Gravenhage(NL)

(54) **Panel-type insulation element for roofs or outside walls.**

(57) A panel-type insulation element, in particular for roofs or outside walls, comprises at least one layer of panel material (1, 2, 17, 18) such as chipboard or plywood, a layer of foam material (3, 4, 19) and also wool material (5, 12, 23). According to an exemplary embodiment, a layer of wool material (5, 12) is provided, on each of the two sides of which there is a layer of foam material (3, 4), there being a layer of panel material (1, 2) at each side of the layers of foam material (3, 4) facing away from the layer of wool material (5, 12). At each of two opposite side edges of the element there may be a rib (6, 7, 15, 16) which is attached to the two layers of panel material (1, 2). The layer of wool material may also be provided with continuous cutouts (13) running in the thickness direction in each of which there is a plug (14) of foam material, which plugs (14) join the layers of foam material (3, 4) on either side of the layer of wool material to each other.

Fig - 2

The invention relates to a panel-type insulation element, in particular for roofs or outside walls, comprising at least one layer of panel material such as chipboard or plywood, and also a layer of foam material. Such elements are used for the thermal and sound insulation of outside walls and roofs. As a consequence of the sandwich structure of relatively thin surface layers of panel material combined with a thicker layer of foam material, they have a low weight compared with the single-shell ribbed panels which are also known and in which comparatively much more panel material is incorporated.

Since the comparatively rigid panel material is on the outside, said insulation elements also have a good flexural and torsional rigidity despite their low weight. This latter is of importance in view of the fact that the insulation elements may also be used as a structural element as, for example, in a roof structure to support the roof tiles.

Although this known panel-type insulation element completely meets the requirements of a low weight and a good thermal insulation, it is found in practice that the sound insulation obtained therewith leaves something to be desired. At any rate, the sound insulation is found to be less good than that of the existing single-shell insulation elements. All this is an adverse consequence of the low mass, associated with the low weight, of the insulation elements. In this respect, the old, existing single-shell insulation elements are found to have the advantage, and this is also obvious in view of their comparatively large mass.

The object of the invention is therefore to provide an insulation element of the type described in the introduction which provides, on the one hand, a low weight and a good thermal insulation and which also offers a good sound insulation. This is achieved in that, according to the invention, the insulation element also contains wool material, such as mineral wool. The wool material is very light and consequently only contributes to the total weight of the element to a small extent. It also offers an excellent sound insulation, while it also makes a certain contribution to the thermal insulation. This has in turn the result that the foam layer used for the thermal insulation can be of somewhat thinner construction without this detracting from the total thermal insulation of the insulation element.

The insulation element according to the invention can be constructed in various forms. According to a first possible embodiment, a layer of wool material is provided, at each of the two sides of which there is a layer of foam material, there being a layer of panel material at each side of the layers of foam material facing away from the wool material. The comparatively soft and vulnerable wool material is then well protected between the hard layers of foam material and panel material. In connection with the structural cohesion of the insulation element, in particular the flexural and torsional rigidity thereof, each of the boundary layers of the insulation element, which consist of a layer of foam material and a layer of panel material, have to be reliably joined to one another. In view of its soft structure, the wool material itself is not suitable for this purpose.

According to a first preferred embodiment, that can be achieved in that at each of two opposite side edges of the element there is a rib which is attached to the two layers of panel material. Such ribs may, for example, be wooden strips such as those which are at present also already used in the insulation element according to the prior art.

Optionally, at least one further rib which is attached to the two layers of panel material may be situated between the two side edges.

According to a second preferred embodiment, however, the layer of wool material may be provided with continuous cutouts which run in its thickness direction and in each of which there is a plug of foam material, which plugs join the layers of foam material on either side of the layer of wool material to each other. The layers of foam material and the plugs preferably consist of a single entity, which can be achieved by pouring the foam material, such as polyurethane foam, into the cutouts during the production of the panels. In this embodiment, the layers of foam material and panel material situated on both sides of the wool material are therefore not joined by ribs but by plugs of the same foam material. Of course, ribs can also be used in this embodiment, for example at the side edges of the insulation element. This last embodiment is beneficial in view of the good finish; the soft and ragged wool material does not then any longer emerge at the outside edge of the element but is hidden behind the ribs.

In this respect it is also beneficial to provide the other two side edges of the insulation element with ribs. These then fulfil not so much a strength function as a protective function for the wool material.

According to a second possible embodiment, the insulation element may comprise in a known manner a layer of foam material provided on both sides with a layer of panel material. According to the invention, a layer of wool material is in that case situated on the outside of one of the layers of panel material. An advantage of this embodiment is that it can be produced comparatively simply. First of all, the foam material can be foamed in a known manner between two panels of panel material, after which the layer of wool material can be attached to the hardened assembly thus formed.

In the processing of said element, the insulation element is so placed that the layer of wool material points towards the outside of the building. In this way, a very good sound damping can be ensured. In this case, the layer of wool material is preferably covered on its side facing away from the layer of panel material by a sheet which is permeable to vapour. As an alternative, a wool material may also be used which is water-repellent.

In a known manner there may be cloth laths on one side of the element for attaching roof battens for a roof covering such as roof tiles. By supporting the insulation elements on purlins or, for example, trusses, it is possible to form a sealed surface on which the tiles can then be installed. Due to their rigidity, the insulation elements are suitable for transmitting the loads presented by the tiles, such as weight loads and wind loads, to the roof trusses.

According to a practical embodiment, the total thickness of the layer or layers of foam material is between 10 and 50 mm, while the thickness of the layer of wool material is between 40 and 80 mm. At the same time the layers of panel material may have a thickness of 3 mm or more.

The invention will be explained in more detail below with reference to three embodiments shown in the figures.

Figure 1 shows a first embodiment of the insulation element according to the invention in perspective.

Figure 2 shows a second embodiment, partially cut away and in perspective.

Figure 3 shows a third embodiment in perspective.

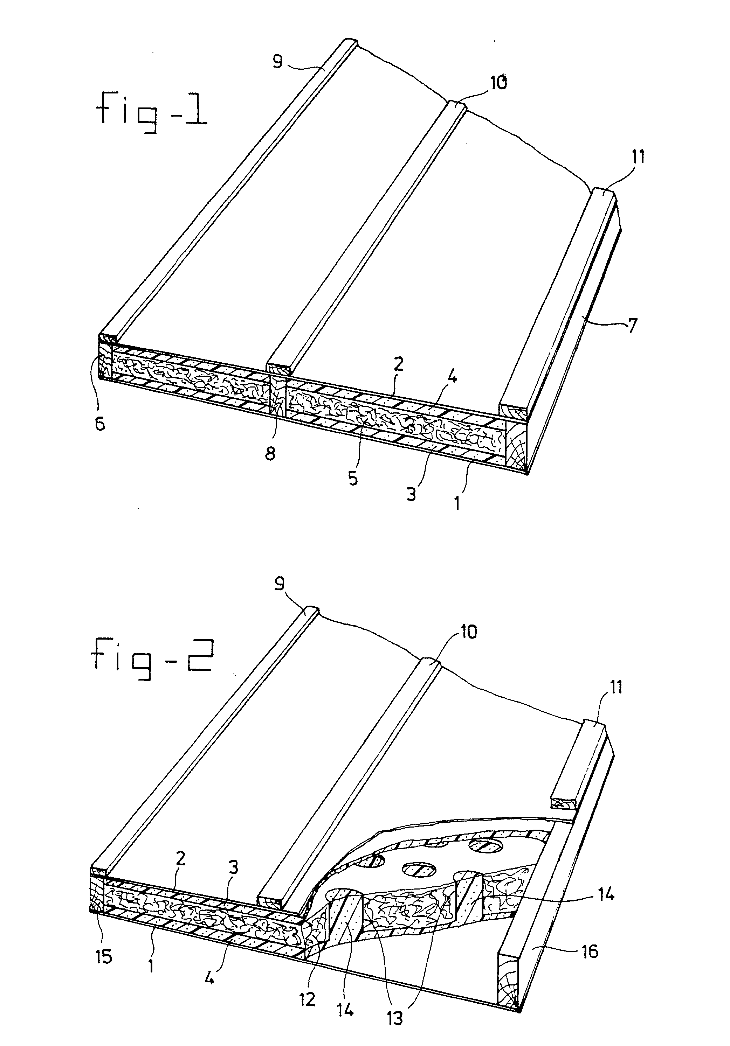

The insulation element shown in Figure 1 comprises two outermost layers of panel material 1, 2, for example chipboard or plywood. Provided on the inside of each of said layers of panel material 1, 2 is a layer of foam material 3, 4. Said foam material may, for example, be polyurethane foam, but any type of hard foam having a suitable thermal insulation effect can be used as an alternative. As an alternative, the panel material may also be of metal.

Provided between the two layers of foam material 3, 4 is a layer of wool material 5 such as, for example, mineral wool. In view of the structural context of the element, in particular its flexural and torsional rigidity, ribs 6, 7 are used at the side edges of the insulation element. Said ribs are attached, for example glued, to the outermost layers of panel material 1, 2. Optionally, yet a further rib 8, also attached to the outermost layers of panel material 1, 2, may be provided between the two ribs 6, 7.

Finally, the insulation element may furthermore be provided with external ribs 9, 10, 11, which not only provide an additional flexural rigidity but may also be used to install roof battens for the roof tiles.

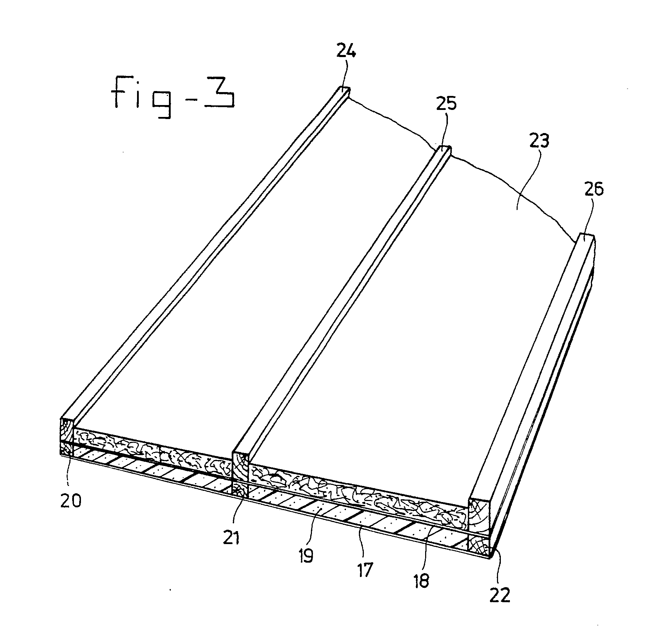

Outermost layers of panel material 1, 2 as well as layers of foam material 3, 4 are also present in the embodiment shown in Figure 2. Now, however, the layer of wool material 12 situated between the two layers of foam material 3, 4 is provided with holes 13. In said holes 13 there are plugs of foam material 14 which form a link between the two layers of foam material 3, 4. In this way, said plugs 14 provide the structural cohesion of the insulation element of Figure 2. Even without using ribs which join the wood panels 1, 2, this insulation element has excellent structural properties.

However, ribs 15, 16 can also be used in this embodiment at the side edges of the insulation element. These elements not only contribute to the structural strength of the element, but they are primarily intended to protect the layer of wool material 12, which is comparatively soft. In this connection, of course, the other two side edges of the insulation material may also be provided with such ribs.

Figure 3 shows an insulation element having layers of panel material 17, 18, between which a complete layer of foam material 19 is provided. Said layer of foam material provides an adequate joint between the layers of panel material 17, 18 in a manner such that the structural cohesion thereof is ensured.

The ribs 20, 21 and 22 may, however, also be provided in this case. The layer of wool material 23 is now attached, for example securely glued, to the outside of the layer of panel material 18. If the insulation element according to Figure 3 is used, the layer of wool material 23 preferably points towards the outside of a building.

Ribs 24, 25, 26, between which the wool material 23 extends, are furthermore provided on the layer of panel material 18. Said ribs 24, 25, 26 can be used in turn to support roof battens on which roof tiles may be accommodated.

The layer of wool material 23 may be covered by a layer of sheet material (not shown) which is permeable to vapour. As an alternative, the layer of wool material 23 may also have a water-repellent nature.

## Claims

1. Panel-type insulation element, in particular for roofs or outside walls, comprising at least one layer of panel material such as chipboard or plywood, and also a layer of foam material, characterised in that the element also contains wool material such as mineral wool.

2. Insulation element according to Claim 1, wherein a layer of wool material is provided, at each of the two sides of which there is a layer of foam material and wherein there is a layer of panel material at each side of the layers of foam material facing away from the wool material.

3. Insulation element according to Claim 2 wherein, at each of two opposite side edges of the element, there is a rib which is attached to the two layers of panel material.

4. Insulation element according to Claim 3, wherein at least one further rib which is attached to the two layers of panel material is situated between the two side edges.

5. Insulation element according to Claim 2, wherein the layer of wool material is provided with continuous cutouts which run in its thickness direction and in each of which there is a plug of foam material, which plugs join the layers of foam material on either side of the layer of wool material to each other.

6. Insulation element according to Claim 1, comprising a layer of foam material provided on both sides with a layer of panel material, wherein a layer of wool material is situated on the outside of one of the layers of panel material.

7. Insulation element according to Claim 6, wherein the layer of wool material is covered by a sheet permeable to vapour at its side facing away from the layer of panel material.

8. Insulation element according to one of the preceding Claims, wherein there are cloth laths on one side of the element for attaching roof battens for a roof covering with roof tiles.

fig-1

fig-2

Fig-3

# EUROPEAN SEARCH REPORT

| | DOCUMENTS CONSIDERED TO BE RELEVANT | | EP 91200795.2 |
|---|---|---|---|

| Category | Citation of document with indication, where appropriate, of relevant passages | Relevant to claim | CLASSIFICATION OF THE APPLICATION (Int. Cl.5) |
|---|---|---|---|
| X | CH - A - 517 224 (ALBIN MURER) * Column 2, line 32 - column 3, line 46; fig. 1 * | 1,2,5 | B 32 B 19/04 B 32 B 21/04 B 32 B 17/00 E 04 B 1/62 E 04 C 2/36 |
| A | | 3,4, 6-8 | |
| P,A | DE - A1 - 3 921 802 (HOLZLEHNER) * Column 2, lines 23-34; fig. 1 * | 1 | |

TECHNICAL FIELDS SEARCHED (Int. Cl.5)

B 32 B 19/00
B 32 B 21/00
B 32 B 17/00
B 32 B 5/00
B 32 B 3/00
E 04 B 1/00
E 04 C 1/00
E 04 C 2/00

The present search report has been drawn up for all claims

| Place of search | Date of completion of the search | Examiner |
|---|---|---|
| VIENNA | 18-06-1991 | ONDER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)